# EUROPÄISCHE PATENTANMELDUNG

(11) **EP 1 388 524 A1**
(43) Veröffentlichungstag der Anmeldung: **11.02.2004**
(21) Anmeldenummer: 02017502.2
(22) Anmeldetag: 06.08.2002
(51) Int. Cl.: C02F 3/12

(54) **Diskontinuierlich arbeitendes Klärverfahren und Kleinkläranlage oder kleine Kläranlage zur Durchführung des Verfahrens**

(71) Anmelder: RHEBAU Rheinische Beton- und Bauindustrie GmbH & Co., 41541 Dormagen (DE)
(72) Erfinder: Die Erfindernennung liegt noch nicht vor
(74) Vertreter: Patentanwälte Hauck, Graalfs, Wehnert, Döring, Siemons, Schildberg

(57) **Zusammenfassung**

Es werden ein diskontinuierlich arbeitendes Kläverfahren und eine Kleinkläranlage (1) oder kleine Kläranlage zur Durchführung dieses Verfahrens beschrieben. Das Verfahren bzw. die Anlage zeichnet sich dadurch aus, daß eine einzige Tauchpumpe (7) verwendet wird, die die Belüftung des Belebungsbeckens (4), die Schlammrückführung und die Klarwasserentleerung durchführt. Auf diese Weise lassen sich ein Klärverfahren und eine Kläranlage mit geringem Kosten-, Montage-, Wartungs- und Platzaufwand realisieren.

## Beschreibung

Die vorliegende Erfindung betrifft ein diskontinuierlich arbeitendes Klärverfahren für eine Kleinkläranlage oder kleine Kläranlage, die mindestens ein Vorklärbecken und ein Belebungsbecken aufweist, mit einer Füllphase, einer Belüftungsphase, einer Schlammrückführphase, einer Sedimentierungsphase und einer Entleerungsphase. Die Erfindung betrifft ferner eine Kleinkläranlage oder kleine Kläranlage zur Durchführung dieses Verfahrens.

Ein solches diskontinuierlich arbeitendes Klärverfahren ist beispielsweise das sogenannte SBR-Verfahren (Sequencing Batch Reactor), bei dem es sich um ein Belebungsverfahren handelt und bei dem das in der Vorklärung grob gereinigte Abwasser schubweise in das Biobecken geführt wird. Dort wird es abwechselnd aerob und anaerob behandlet. Die sich hier ansiedelnden Mikroorganismen bauen die organische Schmutzfracht ab. Da das Abwasser schubweise behandelt wird, kann die Anlage auch starke Belastungsschwankungen sicher ausgleichen. Das Verfahren besitzt eine gleichbleibend gute Reinigungsleistung.

Da diese diskontinuierlich arbeitenden Klärverfahren eine Füllphase, eine Belüftungsphase, eine Schlammrückführphase, eine Sedimentierungsphase und eine Entleerungsphase besitzen, werden entsprechende Einrichtungen benötigt, mit denen diese Phasen realisiert werden können. So finden beispielsweise Pumpen zum Befüllen, spezielle Belüfter zum Belüften des Belebungsbeckens, Schlammrückführpumpen, um den Schlamm aus dem Belebungsbecken in das Vorklärbecken zurückzuführen, und Klarwasserentleerungspumpen Verwendung. Diese getrennten Einrichtungen sind sowohl in bezug auf die Anschaffung und Installation als auch auf den laufenden Betrieb mit einem hohen Aufwand und hohen Kosten verbunden. So müssen als Minimum spezielle Belüftungseinrichtungen in Belebungsbecken angeordnet und eine Schlammrückführpumpe sowie eine Entleerungspumpe mit entsprechenden Rohrleitungen und Schalt- bzw. Steuervorrichtungen angeordnet werden. Diese Einrichtungen nehmen darüber hinaus Platz in Anspruch, was sich insbesondere bei den hier in Rede stehenden Kleinkläranlagen oder kleinen Kläranlagen als negativ auswirkt.

Der Erfindung liegt die Aufgabe zugrunde, ein diskontinuierlich arbeitends Klärverfahren sowie eine Anlage zur Durchführung eines derartigen Verfahrens zur Verfügung zu stellen, die sich mit einem besonders geringen Aufwand bei niedrigem Platzbedarf verwirklichen lassen.

Diese Aufgabe wird erfindungsgemäß bei einem diskontinuierlich arbeitenden Klärverfahren der eingangs genannten Art durch die folgenden Schritte gelöst:
(a) Verwenden einer einzigen Tauchpumpe im Belebungsbecken zum Belüften, Schlammrückführen und Entleeren mit einer Abwasserumwälz/Belüftungs-, Schlammrückführ- und Entleerungsleitung;
(b) Belüften durch Umpumpen des Abwassers vom Belebungsbecken durch die Abwasserumwälz/Belüftungsleitung unter Luftbeimischung bei Sperrung der Schlammrückführ- und Entleerungsleitung;
(c) Schlammrückführen aus dem Belebungsbecken in das Vorklärbecken durch Abpumpen durch die Schlammrückführleitung bei Sperrung der Abwasserumwälz/Belüftungsleitung und Entleerungsleitung;
(d) Sedimentierenlassen bei ausgeschalteter Tauchpumpe; und
(e) Entleeren des Belebungsbeckens durch Abpumpen von Klarwasser durch die Entleerungsleitung bei gesperrter Abwasserumwälz/Belüftungsleitung und Schlammrückführleitung.

Bei dem erfindungsgemäßen Verfahren findet eine einzige Tauchpumpe im Belebungsbecken Verwendung, die sowohl zum Belüften als auch zum Schlammrückführen und Entleeren verwendet wird. Die Tauchpumpe wälzt das Abwasser vom Belebungsbecken durch die Abwasserumwälz/Belüftungsleitung in das Belebungsbecken zurück um, wobei der Abwasserumwälz/Belüftungsleitung Luft zugeführt wird, um das Abwasser zu belüften. Es finden somit keine speziellen Belüftungseinrichtungen im Belebungsbecken selbst mehr Verwendung, wie beim Stand der Technik, sondern der Belüftungsvorgang wird in einem Umwälzvorgang des Abwassers aus dem Belebungsbecken realisiert. Dieser Umwälzvorgang wird mit Hilfe der einzigen Tauchmpumpe bewerkstelligt, wobei in dieser Umwälzphase die Schlammrückführ- und Entleerungsleitung gesperrt werden.

Wenn Überschußschlamm aus dem Belebungsbecken in das Vorklärbecken zurückgeführt werden soll, übernimmt die.einzige Tauchpumpe auch die Aufgabe der Schlammrückführleitung. Hierzu wird der Überschußschlamm von der Tauchpumpe aus dem Belebungsbecken in das Vorklärbecken über die Schlammrückführleitung zurückgepumpt, wobei die Abwasserumwälz/Belüftungsleitung und Entleerungsleitung gesperrt werden.

In der Sedimentierungsphase wird die Tauchpumpe ausgeschaltet.

In der Entleerungsphase des Belebungsbeckens wird von der Tauchpumpe Klarwasser durch die Entleerungsleitung abgepumpt, wobei die Abwasserumwälz/Belüftungsleitung und Schlammrückführleitung gesperrt werden.

Insgesamt werden daher zur Durchführung des erfindungsgemäßen Verfahrens lediglich eine einzige Tauchpumpe und eine Abwasserumwälz/Belüftungsleitung, Schlammrückführleitung und Entleerungsleitung benötigt. Diese Einrichtungen sind kostengünstig, einfach zu installieren und zu warten und darüber hinaus platzsparend, so daß sie insbesondere bei Kleinkläranlagen oder kleinen Kläranlagen eingesetzt werden können.

Das erfindungsgemäße Verfahren beinhaltet ferner, daß die vorgesehene einzige Tauchpumpe auch zum Befüllen des Belebungsbeckens aus dem Vorklärbecken verwendet werden kann. Vorzugsweise wird jedoch das Belebungsbecken aus dem Vorklärbecken nach dem Prinzip der kommunizierenden Röhren befüllt. Mit anderen Worten, nachdem das Klarwasser aus dem Belebungsbecken entleert worden ist, stellt sich dort ein gegenüber dem Vorklärbecken tieferer Abwasserspiegel ein, so daß eine Befüllung des Belebungsbeckens mit Niveauausgleich zum Vorklärbecken automatisch geschieht, wenn entsprechende Sperreinrichtungen geöffnet werden.

Das erfindungsgemäße diskontinuierlich arbeitende Klärverfahren wird vorzugsweise als SBR-Verfahren (Sequencing Batch Reactor) durchgeführt. Dieses Verfahren ist als solches bekannt und muß im folgenden Text nicht mehr in allen Einzelheiten erläutert werden.

Vorzugsweise wird das mindestens eine Vorklärbecken zur Pufferung des Zulaufabwassers verwendet.

Das Absperren und Öffnen der einzelnen Leitungen sowie der Betrieb der Tauchpumpe werden in Weiterbildung der Erfindung zeitabhängig und/oder auf schwimmergesteuerte Weise durchgeführt, wobei zweckmäßigerweise diese Vorgänge über eine programmierte Steuerung durchgeführt werden.

Der Vorgang des Schlammrückführens wird insbesondere wahlweise durchgeführt, d.h. je nach Anfall von Überschußschlamm im Belebungsbecken.

Eine Sequenz des erfindungsgemäßen Verfahrens läuft beispielsweise wie folgt ab:

Es wird davon ausgegangen, daß das Klarwasser aus dem Belebungsbecken entleert worden ist. In diesem Zustand wird über das Prinzip der kommunizierenden Röhren aus dem mindestens einen Vorklärbecken Abwasser in das Belebungsbecken über ein vorgesehenes Rohrsystem eingesaugt, bis sich die Abwasserniveaus im Belebungsbecken und Vorklärbecken angeglichen haben. Für die nachfolgende Belebungsphase (Belüftungsphase) wird die Tauchpumpe eingeschaltet, die das Abwasser aus dem Belebungsbecken durch die Abwasserumwälz/Belüftungsleitung umwälzt und wieder in das Belebungsbecken zurückführt, wobei in die Abwasserumwälz/Belüftungsleitung nach dem Strahlpumpenprinzip Luft aus der Atmosphäre angesaugt wird, so daß ein Abwasser/Luftgemisch in das Belebungsbecken eingeführt wird, das die erforderliche Belüftung des Belebungsbeckens realisiert. Nach Beendigung der Belebungs- bzw. Belüftungsphase wird, falls erforderlich, Überschußschlamm aus dem Belebungsbecken über die Schlammrückführleitung in das Vorklärbecken zurückgeführt. Danach wird die Tauchpumpe ausgeschaltet, und es erfolgt die Absetzphase im Belebungsbecken. Nach Beendigung der Absetzphase wird die Tauchpumpe wieder eingeschaltet, und es wird Klarwasser aus dem Belebungsbecken abgepumpt. Hierzu läßt man vorzugsweise die Pumpe kurz anlaufen, um die Leitung von Abwasser frei zu bekommen, wonach die Entleerungsleitung geöffnet und über diese Klarwasser abgeführt wird.

Natürlich kann diese Sequenz auch ohne Schlammrückführung durchgeführt werden, falls eine solche nicht erforderlich ist.

Die vorstehend genannte Aufgabe wird ferner durch eine Kleinkläranlage oder kleine Kläranlage zur Durchführung des vorstehend beschriebenen Verfahrens gelöst. Diese Kleinkläranlage oder kleine Kläranlage umfaßt: mindestens ein Vorklärbecken und ein Belebungsbecken, eine im Belebungsbecken angeordnete Tauchpumpe, deren Saugseite in das Belebungsbecken gerichtet ist, eine Abwasserumwälz/Belüftungsleitung, deren eines Ende an die Druckseite der Tauchpumpe angeschlossen und deren anderes Ende in das Belebungsbecken geführt ist, eine in die Abwasserumwälz/Belüftungsleitung mündende Luftleitung zur Einführung von Luft in die Abwasserumwälz/Belüftungsleitung, eine an die Druckseite der Tauchpumpe angeschlossene Entleerungsleitung, eine an die Druckseite der Tauchpumpe angeschlossene Schlammrückführleitung sowie je ein in der Abwasserumwälz/Belüftungsleitung, Entleerungsleitung und Schlammrückführleitung angeordnetes Absperrventil.

Die genannten drei Leitungen, nämlich die Abwasserumwälz/Belüftungsleitung, Schlammrückführleitung und Entleerungsleitung, können separat von der Tauchpumpe ausgehen. Vorzugsweise geht jedoch von der Druckseite der Tauchpumpe eine einzige gemeinsame Leitung aus, die sich in die Entleerungsleitung, Schlammrückführleitung und Abwasserumwälz/Belüftungsleitung aufspaltet. Die Absperrventile sind dann in den entsprechenden Zweigleitungen vorgesehen. Es ist klar, daß bei Sperrung der Abwasserumwälz/Belüftungsleitung mit Hilfe des darin vorgesehenen Absperrventiles und bei Sperrung der Schlammrückführleitung mit Hilfe des darin vorgesehenen Absperrventiles bei Betrieb der Tauchpumpe bei geöffnetem Absperrventil in der Entleerungsleitung Klarwasser aus dem Belebungsbecken in einen Vorfluter etc. abgeführt wird. Sind die Entleerungsleitung und die Schlammrückführleitung mit Hilfe der darin vorgesehenen Absperrventile gesperrt, wird im Betrieb der Tauchpumpe Abwasser umgewälzt und entsprechend belüftet. Sind die Entleerungsleitung und die Abwasserumwälz/Belüftungsleitung mit Hilfe der vorgesehenen Absperrventile gesperrt, kann Überschußschlamm aus dem Belebungsbecken in das Vorklärbecken zurückgeführt werden, wenn das entsprechende Absperrventil geöffnet ist.

Die Abwasserumwälz/Belüftungsleitung besitzt vorzugsweise einen in das Vorklärbecken und einen in das Belebungsbecken führenden Zweig. Auf diese Weise dient die Abwasserumwälz/Belüftungsleitung sowohl zum Umwälzen bzw. Belüften des Abwassers als auch zum Befüllen des Belebungsbeckens mit Abwasser aus dem Vorklärbecken. In der Befüllungsphase bei abgeschalteter Tauchpumpe erfolgt eine Befüllung des Belebungsbeckens aus dem Vorklärbecken automatisch nach dem Prinzip der kommunizierenden Röhren über die beiden erwähnten Zweige der Abwasserumwälz/Belüftungsleitung. Damit in der Belüftungsphase das umgewälzte Abwasser bei dieser Ausführungsform nicht in das Vorklärbecken geführt wird, ist in dem in das Vorklärbecken führenden Zweig vorzugsweise ein Rückschlagventil angeordnet.

Was die Beimischung der Luft in die Abwasserumwälz/Belüftungsleitung anbetrifft, so weist die Abwasserumwälz/Belüftungsleitung vorzugsweise eine Mischkammer zur Vermischung des Abwassers mit atmosphärischer Luft auf. Diese Mischkammer ist im Bereich der Mündung einer Luftleitung in die Abwasserumwälz/Belüftungsleitung bzw. angrenzend hieran stromab der Luftleitung vorgesehen. In ihr findet eine innige Vermischung der eingeführten Luft mit dem Abwasser statt, wobei die Luft in feinblasiger Form im Abwasser mitgeführt wird.

In Weiterbildung ist in der Luftleitung ein Absperrventil angeordnet. Mit diesem Absperrventil kann die zugeführte Luft dosiert oder ganz abgesperrt werden. Im letztgenannten Fall wird durch die Abwasserumwälzleitung nur Abwasser umgewälzt, beispielsweise in einer Betriebsphase, in der lediglich eine Homogenisierung des im Becken befindlichen Abwassers gewünscht wird. Durch Betätigung des Absperrventiles in der Luftleitung läßt sich somit der Lufteintrag und damit Sauerstoffeintrag in das Abwasserbecken steuern. Somit lassen sich Prozesse, wie Nitrifikation oder Denitrifikation, mit einfachsten Mitteln einstellen.

Die Abwasserumwälz/Belüftungsleitung weist vorzugsweise einen oberhalb des Abwasserspiegels im Abwasserbecken angeordneten Abschnitt auf, in den die Luftleitung mündet. Die Abwasserumwälz/Belüftungsleitung erstreckt sich daher bei dieser Ausführungsform von der im Belebungsbecken innerhalb des Abwassers angeordneten Tauchpumpe nach oben aus dem Abwasser heraus und geht in einen vorzugsweise horizontal angeordneten Abschnitt über, in den die Luftleitung mündet. Die Abwasserumwälz/Belüftungsleitung spaltet sich dann vorzugsweise in die beiden erwähnten Zweigleitungen auf, wobei sich der in das Belebungsbecken führende Zweig vorzugsweise wieder senkrecht in das Abwasser hinein erstreckt. Dadurch, daß ein Abschnitt der Abwasserumwälz/Belüftungsleitung oberhalb des Abwasserspiegels vorhanden ist, ist dieser Leitungsbereich sichtbar und kann besonders einfach gewartet und ausgetauscht werden, ohne daß das Abwasser aus dem Belebungsbecken abgelassen werden muß. Zweckmäßigerweise besitzt hierbei die Abwasserumwälz/Belüftungsleitung einen austauschbaren Abschnitt, in den die Luftleitung mündet, wobei dieser austauschbare Abschnitt vorzugsweise einen Teil des Abschnittes bildet, der oberhalb des Abwasserspiegels angeordnet ist. Mit einem solchen Abschnitt läßt sich der kritische Bereich, in den die Luftleitung mündet (Mischkammer), besonders gut warten und austauschen.

Es versteht sich, daß am Mündungsende der Abwasserumwälz/Belüftungsleitung (des in das Belebungsbecken führenden Zweiges) geeignete Einrichtungen angeordnet sein können, um für eine entsprechende Verteilung des Abwasser/Luftgemisches zu sorgen. Beispielsweise können hierbei diverse Zweigrohre angeordnet sein, die das Gemisch verschiedenen Stellen im Becken zuführen. Falls gewünscht, können auch entsprechende Düseneinrichtungen oder andere Einrichtungen vorgesehen sein, um für eine entsprechende Feinverteilung des Abwasser/Luftgemisches zu sorgen.

Was die Tauchpumpe anbetrifft, so kann vorzugsweise eine handelsübliche Tauchpumpe Verwendung finden, die in herkömmlicher Weise zur Abwasserförderung eingesetzt wird. Vorzugsweise sollte die Tauchpumpe Feststoffe bis zu einer Körnung von 10 mm noch fördern.

Die erfindungsgemäße Lösung zeichnet sich ferner dadurch aus, daß zur Anordnung bzw. Befestigung der Aggregate kein großer Aufwand betrieben werden muß. So können insbesondere spezielle Traggestelle, die beim Stand der Technik zur Lagerung der Belüftungselemente, Pumpen etc. Verwendung finden, entfallen. Erfindungsgemäß wird insbesondere vorgeschlagen, daß die Tauchpumpe mit den zugehörigen Leitungen ausschließlich durch Fixieren an bzw. auf einer Trennwand zwischen Belebungsbecken und Vorklärbecken befestigt ist. Vorzugsweise erfolgt hierbei die Befestigung über die Abwasserumwälz/Belüftungsleitung, insbesondere über deren horizontalen Abschnitt, der auf der Oberseite der Trennwand, insbesondere mit Hilfe von Klammern, fixiert ist. Durch die entsprechende Verrohrung trägt sich daher die Tauchpumpe selbst.

Eine andere erfindungsgemäße Lösung sieht vor, daß die Tauchpumpe mit den zugehörigen Leitungen schwimmend im Belebungsbecken angeordnet ist. Hierbei können die Leitungen durch Schläuche ausgebildet sein, und eine gewisse Fixierung kann mit Hilfe von Ketten erfolgen.

Es versteht sich, daß die vorstehend erwähnten Absperrventile, falls erforderlich, auch als Dosierventile ausgebildet sein können, mit Hilfe von denen eine dosierte Umwälzung, Schlammrückführung bzw. Entleerung erfolgen kann. Das Betätigen bzw. Schalten dieser Absperrventile erfolgt vorzugsweise über eine programmierbare Steuerung, mittels der geeignete Zeiträume für die entsprechenden Verfahrensphasen eingestellt werden können. Ferner kann das Betätigen der Ventile über geeignete Schwimmerschalter erfolgen. So läßt sich beispielsweise die Anlage auf Vollbetrieb oder Sparbetrieb (in Urlaubszeiten etc.) einstellen.

Die Erfindung wird nachfolgend anhand eines Ausführungsbeispieles in Verbindung mit der Zeichnung im einzelnen erläutert. Es zeigen:
- Figur 1: eine schematische Draufsicht auf eine Kleinkläranlage;
- Figur 2: eine Ansicht des Betriebsmechanismus der Kleinkläranlage der Figur 1 in Richtung des linken Pfeiles in Figur 1; und
- Figur 3: eine Ansicht des Betriebsmechanismus der Kleinkläranlage der Figur 1 in Richtung des unteren Pfeiles in Figur 1.

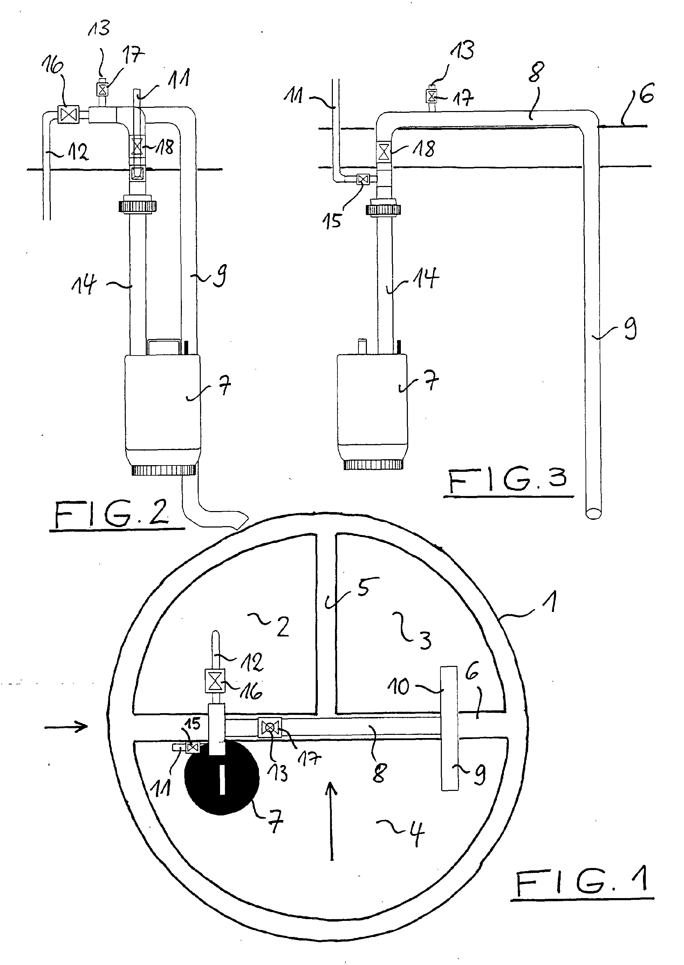

Figur 1 zeigt eine Kleinkläranlage 1 in zylindrischer Form, bei der es sich um eine Dreikammeranlage handelt. Die Kleinkläranlage besitzt ein erstes Vorklärbecken 2, ein zweites Vorklärbecken 3 und ein Belebungsbecken 4. Details dieser Kleinkläranlage, die nicht zur Erläuterung der Erfindung dienen, sind in der Figur weggelassen.

Eine Trennwand 5 trennt die beiden, im Horizontalschnitt etwa viertelkreisförmigen Vorklärbecken 2 und 3 voneinander. Eine zweite Trennwand 6 trennt das im Horizontalschnitt etwa halbkreisförmige Belebungsbecken 4 von den beiden Vorklärbecken 2, 3. Die Kleinkläranlage ist oben offen dargestellt und kann über einen geeigneten Deckel verschlossen werden.

Bei der Befüllung der Kleinkläranlage mit Abwasser gelangt dieses zuerst in das erste Vorklärbecken 2, in dem sich feste Partikel zu einem Schlamm absetzen, und von diesem ersten Vorklärbecken über einen geeigneten Überlauf (nicht gezeigt) in das zweite Vorklärbecken 3, in dem sich ebenfalls feste Partikel absetzen. Von dort gelangt das grob gereinigte Abwasser schubweise in das Belebungsbecken oder Biobecken 4. Dort wird es abwechselnd aerob und anaerob behandelt. Die Funktionsweise eines derartigen Belebungsbeckens ist bekannt und wird an dieser Stelle nicht mehr im einzelnen erörtert. Wesentlich ist, daß im Belebungsbecken Mikroorganismen angesiedelt sind, die Sauerstoff benötigen, der durch Luftzufuhr in das Belebungsbecken bewirkt wird.

Die hier beschriebene Kleinkläranlage wird nach dem vorstehend erwähnten SBR-Verfahren betrieben.

Zur Durchführung der erforderlichen Belüftung bzw. Abwasserumwälzung, Schlammrückführung und Entleerung ist eine einzige Tauchpumpe 7 im Belebungsbecken 4 vorgesehen. Die Tauchpumpe 7 saugt von unten (Saugseite) Abwasser bzw. Klarwasser an und drückt dieses über eine von der Druckseite der Pumpe ausgehende Hauptleitung 14 nach oben. Von der Hauptleitung 14 zweigt eine Entleerungsleitung 11 ab, in der ein geeignetes Absperrventil 15 vorgesehen ist. Diese Entleerungsleitung dient zur Abführung des gereinigten Abwassers (Klarwassers) aus dem Belebungsbecken und kann beispielsweise in eine geeignete Kanalisation führen. Die Hauptleitung 14 erstreckt sich weiter nach oben über den Spiegel des Abwassers im Belebungsbecken 4 hinaus bis zur Oberkante der Trennwand 6 und geht dort in einen horizontalen Abschnitt einer Abwasserumwälz/Belüftungsleitung 8 über. Von der Übergangsstelle der Hauptleitung 14 in den horizontalen Leitungsbereich 8 zweigt eine Schlammrückführleitung 12 ab, in der ebenfalls ein geeignetes Absperrventil 16 vorgesehen ist. Des weiteren befindet sich in der Hauptleitung 14 ein geeignetes Absperrventil 18.

In den horizontalen Abschnitt der Abwasserumwälz/Belüftungsleitung 8 mündet eine Luftleitung 13, in der ein Absperrventil 17 angeordnet ist. Der horizontale Abschnitt ist mit Hilfe von Klammern (nicht gezeigt) auf der Oberseite der Trennwand 6 befestigt, so daß auf diese Weise der gesamte, aus Tauchpumpe und Leitungen bestehende Mechanismus in der Kleinkläranlage fixiert wird.

Wie man Figur 1 entnehmen kann, mündet der horizontale Abschnitt der Abwasserumwälz/Belüftungsleitung 8 in einen Verzweigungspunkt, von dem aus ein Leitungszweig 10 sich in das zweite Vorklärbecken 3 erstreckt, während sich ein Leitungszweig 9 nach unten in das Belebungsbecken 4 erstreckt. Über die Zweigleitungen 10 und 9 kann Abwasser aus dem zweiten Vorklärbecken 3 in das Belebungsbecken geführt werden.

Die hier beschriebene Kleinkläranlage funktioniert in der folgenden Weise:

Wenn Klarwasser über die Hauptleitung 14 und die Entleerungsleitung 13 bei geschlossenen Ventilen 15 und 17 aus dem Belebungsbecken 4 abgeführt worden ist, beginnt sich das Belebungsbecken 4 wieder über die Zweigleitungen 10 und 9 vom zweiten Vorklärbecken 3 aus zu füllen. Dieser Füllvorgang ist beendet, wenn ein Niveauausgleich zwischen dem zweiten Vorklärbecken 3 und dem Belebungsbecken 4 erreicht ist.

Es wird nunmehr bei geschlossenen Ventilen 17 und 16 mit der Abwasserumwälz- bzw. Belüftungsphase begonnen. Hierzu wird die Tauchpumpe 7 eingeschaltet, die das Abwasser aus dem Belebungsbecken 4 ansaugt und über die Hauptleitung 14 in die Abwasserumwälz/Belüftungsleitung 8 drückt. Auf diese Weise wird das Abwasser umgewälzt und über die Zweigleitung 9 in das Belebungsbecken 4 zurückgeführt. Ein in der Zweigleitung 10 angeordnetes Rückschlagventil verhindert, daß hierbei Abwasser aus dem Vorklärbecken 3 angesaugt bzw. in das Vorklärbecken geführt wird. Durch die Umwälzung des Abwassers wird bei geöffnetem Ventil 17 Luft aus der Luftleitung 13 nach dem Strahlpumpenprinzip mit in die Leitung 8 angesaugt und in Form von kleinen Luftblasen im Abwasserstrom mitgeführt. Dieses Abwasser/Luftgemisch gelangt über die Zweigleitung 9 in das Belebungsbecken 4 und bewirkt die entsprechende Belüftung desselben.

Bei Beendigung der Belüftungsphase wird die Abwasserumwälz/Belüftungsleitung 8 abgesperrt (nicht gezeigt), und das Ventil 16 in der Schlammrückführleitung 12 wird geöffnet. Die Tauchpumpe 7 pumpt nunmehr Überschußschlamm aus dem Belebungsbecken 4 in das erste Vorklärbecken 2 zurück. Wenn der Schlammrückführvorgang beendet ist, kann das Ventil 16 wieder geschlossen werden, und es kann bei ausgeschalteter Tauchpumpe 7 der gewünschte Absetzvorgang im Belebungsbecken 4 stattfinden. Danach kann erneut Klarwasser bei geöffnetem Ventil 15 über die Entleerungsleitung 11 abgepumpt werden.

## Patentansprüche

1. Diskontinuierlich arbeitendes Klärverfahren für eine Kleinkläranlage oder kleine Kläranlage, die mindestens ein Vorklärbecken und ein Belebungsbecken aufweist, mit einer Füllphase, einer Belüftungsphase, einer Schlammrückführphase, einer Sedimentierungsphase und einer Entleerungsphase, **gekennzeichnet durch** die folgenden Schritte:
(a) Verwenden einer einzigen Tauchpumpe im Belebungsbecken zum Belüften, Schlammrückführen und Entleeren mit einer Abwasserumwälz/Belüftungs-, Schlammrückführ- und Entleerungsleitung;
(b) Belüften **durch** Umpumpen des Abwassers vom Belebungsbecken **durch** die Abwasserumwälz/Belüftungsleitung unter Luftbeimischung bei Sperrung der Schlammrückführ- und Entleerungsleitung;
(c) Schlammrückführen aus dem Belebungsbecken in das Vorklärbecken **durch** Abpumpen **durch** die Schlammrückführleitung bei Sperrung der Abwasserumwälz/Belüftungsleitung und Entleerungsleitung;
(d) Sedimentierenlassen bei ausgeschalteter Tauchpumpe; und
(e) Entleeren des Belebungsbeckens **durch** Abpumpen von Klarwasser **durch** die Entleerungsleitung bei gesperrter Abwasserumwälz/Belüftungsleitung und Schlammrückführleitung.

2. Klärverfahren nach Anspruch 1, **dadurch gekennzeichnet, daß** das Belebungsbecken aus dem Vorklärbecken nach dem Prinzip der kommunizierenden Röhren befüllt wird.

3. Klärverfahren nach Anspruch 1 oder 2, **dadurch gekennzeichnet, daß** es als SBR-Verfahren (Sequencing Batch Reactor) durchgeführt wird.

4. Klärverfahren nach einem der vorangehenden Ansprüche, **dadurch gekennzeichnet, daß** das Vorklärbecken zur Pufferung des Zulaufabwassers verwendet wird.

5. Klärverfahren nach einem der vorangehenden Ansprüche, **dadurch gekennzeichnet, daß** das Absperren und Öffnen der einzelnen Leitungen sowie der Betrieb der Tauchpumpe zeitabhängig und/oder auf schwimmergesteuerte Weise durchgeführt werden.

6. Klärverfahren nach Anspruch 5, **dadurch gekennzeichnet, daß** das Absperren und Öffnen sowie der Pumpenbetrieb über eine programmierte Steuerung durchgeführt wird.

7. Klärverfahren nach einem der vorangehenden Ansprüche, **dadurch gekennzeichnet, daß** das Schlammrückführen wahlweise durchgeführt wird.

8. Kleinkläranlage (1) oder kleine Kläranlage zur Durchführung des Verfahrens nach einem der vorangehenden Ansprüche mit mindestens einem Vorklärbecken (2, 3) und einem Belebungsbecken (4), die eine im Belebungsbecken (4) angeordnete Tauchpumpe (7), deren Saugseite in das Belebungsbecken (4) gerichtet ist, eine Abwasserumwälz/Belüftungsleitung (8), deren eines Ende an die Druckseite der Tauchpumpe (7) angeschlossen und deren anderes Ende in das Belebungsbecken (4) geführt ist, eine in die Abwasserumwälz/Belüftungsleitung (8) mündende Luftleitung (13) zur Einführung von Luft in die Abwasserumwälz/Belüftungsleitung (8), eine an die Druckseite der Tauchpumpe (7) angeschlossene Entleerungsleitung (13), eine an die Druckseite der Tauchpumpe (7) angeschlossene Schlammrückführleitung (12) sowie je ein in der Abwasserumwälz/Belüftungsleitung (8), Entleerungsleitung (13) und Schlammrückführleitung (12) angeordnetes Absperrventil (15, 16) aufweist.

9. Kleinkläranlage oder kleine Kläranlage nach Anspruch 8, **dadurch gekennzeichnet, daß** von der Druckseite der Tauchpumpe (7) eine einzige gemeinsame Leitung (14) ausgeht, die sich in die Entleerungsleitung (13), Schlammrückführleitung (12) und Abwasserumwälz/Belüftungsleitung (8) aufspaltet.

10. Kleinkläranlage oder kleine Kläranlage nach Anspruch 8 oder 9, **dadurch gekennzeichnet, daß** die Abwasserumwälz/Belüftungsleitung (8) einen in das Vorklärbecken (3) und einen in das Belebungsbecken (4) führenden Zweig (10, 9) besitzt.

11. Kleinkläranlage oder kleine Kläranlage nach Anspruch 10, **dadurch gekennzeichnet, daß** im in das Vorklärbecken (3) führenden Zweig (10) ein Rückschlagventil angeordnet ist.

12. Kleinkläranlage oder kleine Kläranlage nach einem der Ansprüche 8 bis 11, **dadurch gekennzeichnet, daß** in der Abwasserumwälz/Belüftungsleitung (8) eine Mischkammer zur Vermischung von Luft und Abwasser angeordnet ist.

13. Kleinkläranlage oder kleine Kläranlage nach einem der Ansprüche 8 bis 12, **dadurch gekennzeichnet, daß** in der Luftleitung (13) ein Absperrventil (17) angeordnet ist.

14. Kleinkläranlage oder kleine Kläranlage nach einem der Ansprüche 8 bis 13, **dadurch gekennzeichnet, daß** die Abwasserumwälz/Belüftungsleitung (8) einen oberhalb des Abwasserspiegels angeordneten Abschnitt aufweist, in den die Luftleitung (13) mündet.

15. Kleinkläranlage oder kleine Kläranlage nach einem der Ansprüche 8 bis 14, **dadurch gekennzeichnet, daß** die Tauchpumpe (7) mit den zugehörigen Leitungen ausschließlich durch Fixieren an bzw. auf einer Trennwand (6) zwischen Belebungsbecken (4) und Vorklärbecken (2, 3) befestigt ist.

16. Kleinkläranlage oder kleine Kläranlage nach einem der Ansprüche 8 bis 14, **dadurch gekennzeichnet, daß** die Tauchpumpe mit den zugehörigen Leitungen schwimmend im Belebungsbecken angeordnet ist.
